# EUROPÄISCHE PATENTSCHRIFT

(11) **EP 0 400 376 B1**
(45) Veröffentlichungstag und Bekanntmachung des Hinweises auf die Patenterteilung: **13.07.1994**
(21) Anmeldenummer: 90108883.1
(22) Anmeldetag: 11.05.1990
(51) Int. Cl.: B60J 7/12

(54) **Verstelleinrichtung an einem Faltverdeck eines Kraftfahrzeugs**
Adjusting flexible hood device for a motor vehicle
Dispositif de réglage à un toit pliant pour un véhicule automobile

(30) Priorität: 27.05.1989 DE 3917284
(43) Veröffentlichungstag der Anmeldung: 05.12.1990
(73) Patentinhaber: Bayerische Motoren Werke Aktiengesellschaft, 80788 München (DE)
(72) Erfinder: König, Johann, D-8066 Günding (DE); Ball, Wilfried, D-8312 Dingolfing (DE)

(56) Entgegenhaltungen:
- DE-B- 2 327 486
- DE-C- 885 356

## Beschreibung

Die Erfindung betrifft eine Verstelleinrichtung an einem Faltverdeck eines Kraftfahrzeugs, mit den im Oberbegriff des Patentanspruchs 1 angegebenen Merkmalen.

Eine derartige Verstelleinrichtung ist bereits aus der DE-C-885 356 bekannt, die an beiden Dachseiten jeweils an einem einen vorderen und hinteren Dachlenker verbindenden Gelenk einen Elektromotor aufweist, der ein selbsttätiges Öffnen und Schließen des Faltverdecks ermöglicht. Ein wesentlicher Nachteil dieser Verstelleinrichtung ist, daß der Elektromotor so auszulegen ist, daß er die beim Öffnen und Schließen des Faltverdecks maximal auftretenden Öffnungs- und Schließkräfte überwindet. Die Öffnungs- und Schließkräfte des Faltverdecks sind jedoch in Abhängigkeit von dem Verstellweg unterschiedlich, so daß der Elektromotor in den Verstellbereichen mit geringen Öffnungs- und Schließkräften überdimensioniert ist. Außerdem schränkt der Elektromotor bei geschlossenem Faltverdeck seitliche Kopfbewegungen einer auf der zugeordneten Fahrzeugseite im Fondraum sitzenden Person ein, wodurch sich die Verletzungsgefahr bei einem Unfall erhöht. Erforderlich ist auch eine lange Stromkabelzuführung an das Gelenk der Dachlenker, die beim Öffnen und Schließen des Faltverdecks abknickt und dadurch beschädigt werden kann.

Der Erfindung liegt die Aufgabe zugrunde, eine Verstelleinrichtung an einem Faltverdeck eines Kraftfahrzeugs nach dem Oberbegriff des Patentanspruchs 1 anzugeben, die auf einfache Weise mit einem geringen Energiebedarf ein selbsttätiges Öffnen und/oder Schließen des Faltverdecks ermöglicht. Darüber hinaus soll die Verstelleinrichtung so anzuordnen sein, daß der Fahrgastraum des Kraftfahrzeugs durch die Verstelleinrichtung nicht oder nur unwesentlich eingeschränkt ist.

Diese Aufgabe ist durch die im Kennzeichen des Patentanspruchs 1 angegebenen Merkmale gelöst. Besonders vorteilhaft ist, daß mit dieser Verstelleinrichtung das Faltverdeck durch den Motorantrieb zwangsweise aus der Schließstellung und/oder aus einer Vorschließstellung in die Schließstellung des Faltverdecks verlagert werden kann. Hierzu ist lediglich ein einfaches, mit dem Motorantrieb in Verbindung stehendes Stellglied erforderlich, das sich beispielsweise zum Öffnen und Schließen des Faltverdecks an einer einfach zu bildenden Stützschulter an einem der Dachlenker oder an dem Lenker abstützt. Das Stellglied kann ein einfacher Schwenkhebel oder ein Schiebeelement und die Stützschulter ein Wandabschnitt an einem der Dachlenker oder an dem Lenker sein. Ebenso kann die Stützschulter durch einen Bolzen oder Zapfen gebildet sein, der von einem der Dachlenker oder dem Lenker absteht. Die Verstelleinrichtung eignet sich insbesondere für Faltverdecke, bei denen jeweils der seitlich vordere und hintere Dachlenker ein Übertotpunktgelenk bilden. Das Verdeckgestänge kann in einem vollautomatischen Bewegungsablauf von weiteren Antriebsmitteln aus der vollständig zurückgeschwenkten Offenstellung in eine Vorschließstellung gebracht und anschließend von der Verstelleinrichtung zwangsweise in die Schließstellung des Faltverdecks und umgekehrt in die Offenstellung verlagert werden. Durch das Zusammenwirken der weiteren Antriebsmittel mit der Verstelleinrichtung ist eine an die unterschiedlichen Öffnungs- und Schließkräfte angepaßte Auslegung der Antriebsmittel und der Verstelleinrichtung möglich, wodurch diese eine geringere Antriebsleistung erfordern. Die Verstelleinrichtung kann ohne weiteres so angeordnet werden, daß sie den Fahrgastraum ohne Vergrößerung des Fahrzeugs nicht oder nur unwesentlich einschränkt.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Fig. 1: ein erstes Ausführungsbeispiel in Seitenansicht, mit einem schwenkbaren Stellglied,
- Fig. 2: eine Fig. 1 entsprechende Ansicht in Schließstellung des Faltverdecks,
- Fig. 3: ein zweites Ausführungsbeispiel mit einem verschiebbaren Stellglied,
- Fig. 4: das Stellglied gemäß Fig. 3 in Vorschließstellung des Faltverdecks,
- Fig. 5: eine Seitenansicht von den beiden Dachlenkern und dem Lenker in Fig. 3,
- Fig. 6: eine Draufsicht auf eine die Lenker in Fig. 5 verbindende Tragbrücke und
- Fig. 7: eine Fig. 6 entsprechende Ansicht mit quer angeordnetem Motorantrieb.

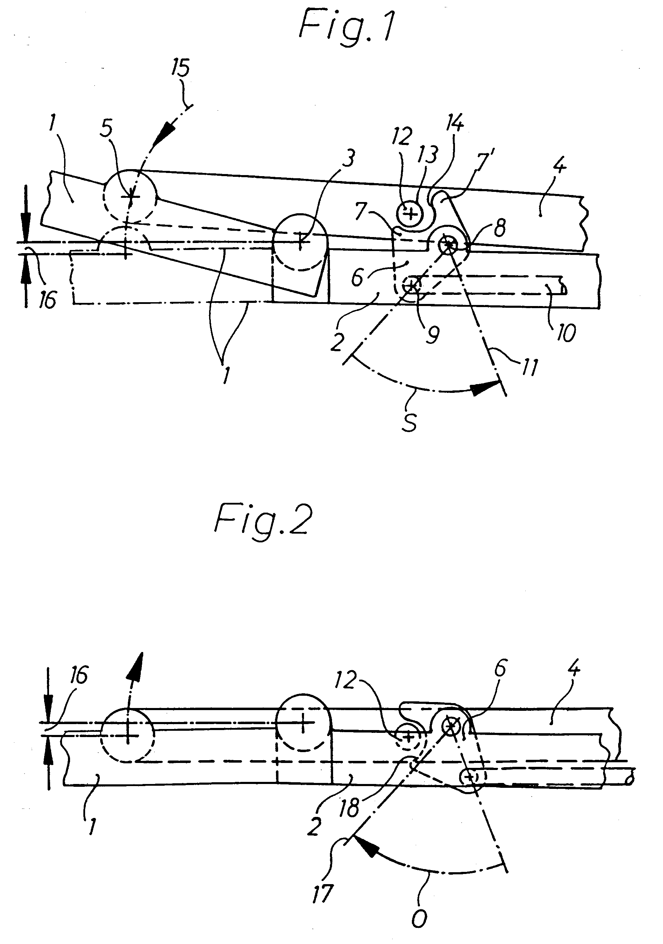

Das in Fig. 1 in einem ersten Ausführungsbeispiel nur teilweise in Seitenansicht dargestellte Verdeckgestänge trägt einen nicht dargestellten Verdeckstoff eines an einem Cabriolet-Kraftfahrzeug vorgesehenen Faltverdecks. Das Verdeckgestänge weist an beiden Dachseiten symmetrisch gegenüberliegend je einen vorderen Dachlenker 1 und einen hinteren Dachlenker 2 auf, die in einem Gelenk 3 um eine Querachse schwenkbar verbunden sind. Ein Lenker 4 greift in einem Gelenk 5 an einem Hebelarm des vorderen Dachlenkers 1 an. In Schließstellung des Faltverdecks verlaufen die Dachlenker 1, 2 und der Lenker 4 etwa in Fahrzeuglängsrichtung. Das Faltverdeck ist von nicht dargestellten Antriebsmitteln, beispielsweise hydraulischen Stellzylindern, in eine Vorschließstellung verlagerbar, in der sich die Dachlenker 1, 2 und der Lenker 4 in der in der Figur dargestellten Lage befinden. Eine mit einer nicht dargestellten Steuer- oder Regeleinrichtung zusammenwirkende Verstelleinrichtung ermöglicht ein weiteres, bei dem Ausführungsbeispiel vollautomatisches Schließen des Faltverdecks, bei dem der Verdeckstoff gespannt wird. Die Verstelleinrichtung weist bei dem Ausführungsbeispiel ein Stellglied 6 mit zwei Stützarmen 7, 7′ auf. Bei dem Ausführungsbeispiel ist das Stellglied 6 um eine Querachse 8 an dem hinteren Dachlenker 2 schwenkbar befestigt. Die beiden Stützarme 7, 7′ sind zur Querachse 8 etwa V-förmig angeordnet. An einem Hebelarm des Stellgliedes 6 greift in einem Gelenk 9 ein Stangenelement 10 an, das mit einem nicht dargestellten Motorantrieb in Verbindung steht. Ist der in entgegengesetzte Wirkrichtungen akivierbare Motorantrieb von der Steuer- oder Regeleinrichtung in einem dem weiteren Schließen des Faltverdecks entsprechenden Sinn beispielsweise beim Erreichen der Vorschließstellung selbsttätig oder über einen Schalter von Hand eingeschaltet, so schwenkt das Stellglied 6 in Pfeilrichtung S in die durch eine strichpunktierte Linie 11 gekennzeichnete Lage. Dabei wird der Lenker 4 über einen seitlich von dem Lenker 4 abstehenden Bolzen oder Zapfen 12, der eine Stützschulter 13 für eine Wirkfläche 14 an dem Stützarm 7′ bildet, an den hinteren Dachlenker 2 angenähert. Der vordere Dachlenker 1 wird dadurch in Pfeilrichtung 15 über eine Längslage, in der der vordere und hintere Dachlenker gestreckt sind, hinaus in eine Übertotpunktlage eingeschwenkt, in der das Faltverdeck geschlossen und der Verdeckstoff gespannt ist. In der dargestellten Übertotpunktlage liegt das Gelenk 5 etwa um den Abstand 16 tiefer als das Gelenk 3, so daß sich das Faltverdeck unter der Spannkraft des Verdeckstoffes auch dann nicht öffnen kann, wenn das Stellglied 6 in Schließstellung des Faltverdecks vor einer Verlagerung in eine Öffnungslage nicht gesichert ist. Der vordere Dachlenker könnte sich auch in Schließstellung des Faltverdecks in einer anderen als der angegebenen Lage befinden, die keine Übertotpunktlage ist, wenn das Verdeckgestänge in Schließstellung von dem mit einer Stützschulter zusammenwirkenden Stellglied beispielsweise durch Selbsthemmung des Motorantriebs zuverlässig festgehalten ist. Es ist auch möglich, daß das Stellglied an einem der Dachlenker oder an dem Lenker beispielsweise über ein Hebelgetriebe schwenkbar oder verschiebbar angeordnet ist. In diesem Fall ist die Stützschulter an dem anderen Teil, an dem Lenker oder an einem der Dachlenker, auszubilden. Die Stützschulter kann auch durch einen Wandabschnitt des Gelenks 3 gebildet sein, wenn das Stellglied an dem Lenker verlagerbar angeordnet ist.

Wird das Stellglied 6 aus der in Fig. 2 dargestellten Lage, die der Schließstellung des Faltverdecks entspricht, in Pfeilrichtung 0 bis in die durch die strichpunktierte Linie 17 dargestellte Lage verschwenkt, so verlagern sich durch das Zusammenwirken einer Wirkfläche 18 an dem Stellglied 6 mit dem Zapfen 12 die Dachlenker 1, 2 und der Lenker 4 in die in Fig. 1 dargestellte Vorschließstellung. Das weitere Öffnen des Faltverdecks kann nun von Hand oder wie in dem Ausführungsbeispiel durch die nicht dargestellten weiteren Antriebsmittel vollautomatisch erfolgen.

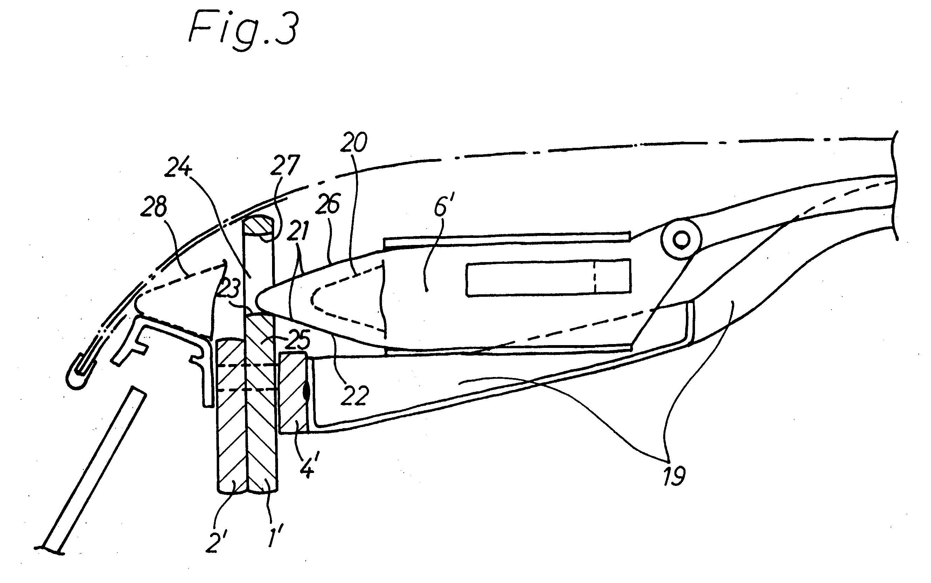

Bei dem in Fig. 3 dargestellten zweiten Ausführungsbeispiel ist ein Stellglied 6′ vorgesehen, das an einem die seitlich gegenüberliegenden Lenker 4′ verbindenden Träger 19 in Querrichtung verschiebbar angeordnet ist. Das Faltverdeck weist mit Ausnahme der nachfolgend beschriebenen Unterschiede einen dem Faltverdeck gemäß den Fig. 1 und 2 entsprechenden Aufbau auf, mit an beiden Fahrzeugseiten jeweils einem vorderen Dachlenker 1′, einem hinteren Dachlenker 2′ und einem an einem Hebelarm des vorderen Dachlenkers 1′ angreifenden Lenker 4′. Das Stellglied 6′ ist zum Öffnen des Faltverdecks aus einer durch eine unterbrochene Linie 20 gekennzeichneten zurückgezogenen Lage in die in der Figur durch die ausgezogene Linie 21 angegebene Entriegelungsstellung verlagert, in der eine am Stellglied 6′ ausgebildete Wirkfläche 22 mit einer Stützfläche am vorderen Dachlenker 1′ zusammenwirkt. Bei dem Ausführungsbeispiel ist die Stützschulter durch den unteren Rand 23 einer schlitzförmigen Öffnung 24 in einer im hinteren Bereich mit dem vorderen Dachlenker 1′ verbundenen Stützplatte gebildet. Durch die seitliche Stellbewegung des Stellgliedes 6′ wird der vordere Dachlenker 1′ gegenüber dem hinteren Dachlenker 2′ so aus einer der Schließstellung des Faltverdecks entsprechenden Übertotpunktlage verschwenkt, daß sich nach dem anschließenden Zurückziehen des Stellgliedes 6′ in die Lage 20 die Dachlenker 1′, 2′ selbsttätig unter der Spannkraft des Verdeckstoffes in eine nicht dargestellte, der Vorschließstellung entsprechende Offenstellung verlagern.

Auch bei diesem Ausführungsbeispiel sind weitere, nicht dargestellte Antriebsmittel vorgesehen, die das Faltverdeck in einem vollautomatischen Öffnungsvorgang aus dieser Vorschließstellung in eine vollständig zurückgeschwenkte Öffnungsstellung verlagern.

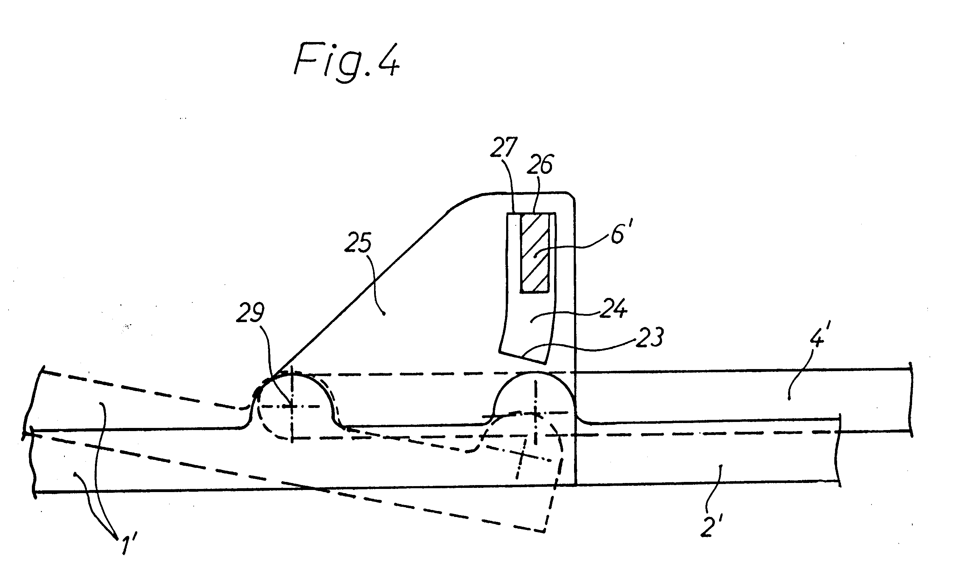

Ist in umgekehrter Weise das Faltverdeck von den nicht dargestellten weiteren Antriebsmitteln aus der vollständig zurückgeschwenkten Offenstellung in die in Fig. 4 dargestellte Vorschließstellung verlagert, so kann die beispielsweise selbsttätig aktivierte Verstelleinrichtung das Faltverdeck aus der Vorschließstellung in die Schließstellung verlagern, in der der Innenraum des Fahrzeugs von dem Faltverdeck wasserdicht überdeckt ist. Um diesen Schließvorgang zu bewirken, weist das Stellglied 6′ an seinem oberen Bereich eine weitere Wirkfläche 26 auf, die mit einer durch den oberen Rand der Öffnung 24 in der Stützplatte 25 gebildeten Stützschulter 27 zusammenwirkt. Wie man aus Fig. 3 erkennt, ist das Stellglied 6′ zum vollständigen Schließen des Faltverdecks bis in die durch die unterbrochene Linie 28 gekennzeichnete Lage in die Öffnung 24 einzuschieben, worauf sich die Dachlenker 1′, 2′ unter der Spannkraft des Verdeckstoffes selbsttätig in ihre durch ausgezogene Linien dargestellte, einer Übertotpunktstellung entsprechende Stellung verlagern, in der das Faltverdeck vollständig geschlossen ist. Wie man aus Fig. 4 weiter erkennt, ist der untere Bereich der Öffnung 24 um die Anlenkstelle 29 des Lenkers 4′ an dem vorderen Dachlenker 1′ gekrümmt, um einen seitlichen Freiraum zwischen dem in die Öffnung 24 eindringenden Stellglied 6′ und den Seitenwänden der Öffnung 24 sicherzustellen, wenn die Dachlenker aus der Vorschließstellung in die Schließstellung, und umgekehrt, verschwenken.

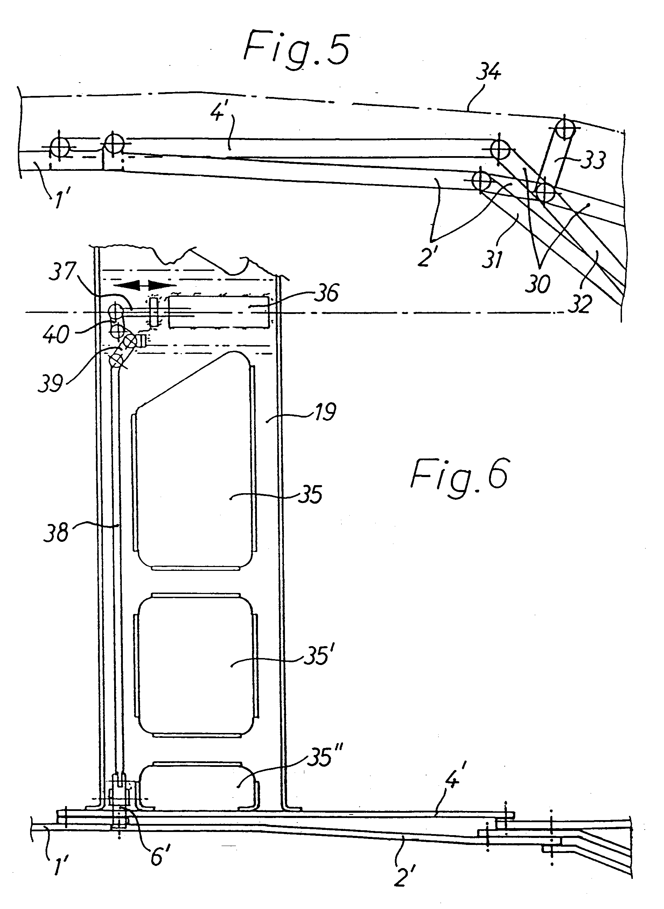

In der Darstellung gemäß Fig. 5 ist neben dem vorderen Dachlenker 1′, dem hinteren Dachlenker 2′ und dem Lenker 4′ eine obere Spannstange 30, ein Hauptlenker 31, eine Hauptsäule 32 und ein Hauptspriegel 33 erkennbar, an dem sich der Verdeckstoff 34 des Faltverdecks abstützt. Das Verdeckgestänge des Faltverdecks könnte aber auch anders mit einem vorderen und hinteren Dachlenker und einem Lenker gebildet sein.

Aus der in Fig. 6 angegebenen Draufsicht ist ersichtlich, daß bei dem Ausführungsbeispiel die seitlich gegenüberliegenden Lenker 4′, von denen aufgrund der Symmetrie zur vertikalen Längsmittelebene nur ein Lenker 4′ dargestellt ist, über den Träger 19 verbunden sind. Der Träger 19 kann wie bei dem Ausführungsbeispiel ein Blechteil sein. Ebenso läßt sich der Träger 19 aus einem anderen Material, beispielsweise aus Kunststoff, fertigen. Zur Gewichtseinsparung weist der Träger 19 Ausschnitte 35, 35′, 35'' auf, die so angeordnet sind, daß die Steifigkeit des Trägers 19 erhalten bleibt. Der Träger 19 wirkt wie ein Überrollbügel, der die Fahrzeuginsassen bei einem Unfall schützt. An diesem ist ein durch einen doppelwirkenden hydraulischen Stellzylinder 36 gebildeter Motorantrieb mit entsprechend dem Doppelpfeil in Längsrichtung verstellbarer Kolbenstange 37 abgestützt. Der Motorantrieb könnte auch durch einen anderen Antrieb, beispielsweise durch einen hydraulisch einfachwirkenden oder einen pneumatisch einfach- oder doppelwirkenden Stellzylinder gebildet sein. Ebenso kann eine Elektromotor Verwendet werden. Zur Übertragung der Bewegung der Kolbenstange 37 auf das Stellglied 6′ dient bei dem Ausführungsbeispiel eine in Querrichtung verlaufenede Stellstange 38, die einerseits gelenkig mit dem Stellglied 6′ und andererseits gelenkig mit einem Arm eines zweiarmigen Winkelhebels 39 verbunden ist, der schwenkbar an dem Träger 19 abgestützt ist. An dem freien Schenkelende des Winkelhebels 39 ist ein Übertragungshebel 40 angelenkt, der mit dem vorstehenden Ende der Kolbenstange 37 gelenkig verbunden ist. Durch diese Anordnung des Stellzylinders 36 und der Übertragungselemente ist der Motorantrieb unauffällig und verletzungssicher untergebracht. Der Fahrgastraum oder die Bauweise des Faltverdecks wird nicht oder kaum eingeschränkt. Eine Bewegungsübertragung von der Kolbenstange 37 auf das Stellglied 6′ kann auch anders, beispielsweise über ein oder mehrere Seile erfolgen. Ist wie bei dem zweiten Ausführungsbeispiel ein verschiebbares Stellglied 6′ vorgesehen, so kann dieses in Querrichtung oder in einer anderen Richtung, beispielsweise in Längsrichtung, an dem Lenker 4′ oder an dem vorderen oder hinteren Dachlenker verstellbar angeordnet sein.

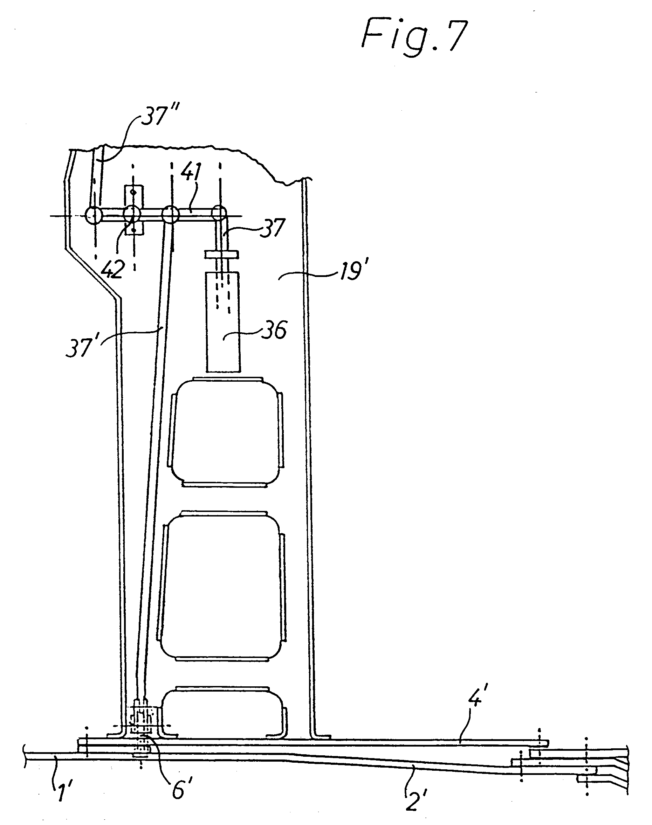

Eine mögliche Variante zu dem zweiten Ausführungsbeispiel ist in Fig. 7 abgebildet, mit einem Stellzylinder 36, der an einem mit dem Träger 19 vergleichbaren Träger 19′, mit in Querrichtung verstellbarer Kolbenstange 37 abgestützt ist. Das vorstehende Ende der Kolbenstange 37 greift gelenkig an einem gestreckt zweiarmigen Schwenkhebel 41 an, der etwa in Fahrzeuglängsrichtung verläuft und um eine vertikale Achse 42 schwenkbar an dem Träger 19′ abgestützt ist. Symmetrisch zur Achse 42 greifen an dem Schwenkhebel jeweils eine Stellstange 37′, 37'' an, die jeweils gelenkig mit einem zugeordneten Stellglied 6′ verbunden sind.

Bei den Ausführungsbeispielen wurden schwenkbare bzw. verschiebbare Stellglieder verwendet, die zwangsweise ein Öffnen des Faltverdecks aus der Schließstellung und ein vollständiges Schließen aus einer Vorschließstellung bewirken. Ebenso könnten Stellglieder vorgesehen sein, die nur ein Schließen oder aber nur ein Öffnen des Faltverdecks bewirken, beispielsweise wenn das Faltverdeck nur in eine der angegebenen Richtungen schwer zu verstellen ist. Ohne den Erfindungsgedanken zu verlassen, kann für das Schließen des Faltverdecks und für das Öffnen des Faltverdecks beispielsweise auf beiden Fahrzeugseiten jeweils ein eigenes, schwenkbares oder verschiebbares Stellglied vorgesehen sein. Das Stellglied kann wie bei dem ersten Ausführungsbeispiel eine Arretierung der Dachlenker und des Lenkers bewirken, wenn das Faltverdeck geschlossen ist. Bei dem zweiten Ausführungsbeispiel gemäß Fig. 3 ist zwar keine derartige Verriegelung vorgesehen, doch kann mit dem angegebenen oder einem ähnlichen Stellglied auch bei dieser Ausfühung eine Arretierung der Dachlenker und des Lenkers in Schließstellung des Faltverdecks erreicht werden, wodurch sich die Sicherheit vor einem unbeabsichtigten Öffnen des Faltverdecks bei einem Unfall erhöht. Der Motorantrieb kann wie bei den Ausführungsbeispielen als zentraler Antrieb ausgebildet sein, der beispielsweise zwei seitlich gegenüberliegenden Stellgliedern zugeordnet ist. Ebenso kann jedem Stellglied ein beispielsweise seitlich angeordneter Motorantrieb oder bei mehr als zwei Stellgliedern beispielsweise jeweils zwei Stellgliedern ein eigener Motorantrieb zugeordnet sein. Ist ein verschiebbares Stellglied vorgesehen, so kann dieses an dem mit der Stützschulter zusammenwirkenden Ende mit einem drehbaren Gleitrad versehen sein, um die zwischen dem Stellglied und der Stützschulter auftretenden Reibkräfte zu vermindern.

## Patentansprüche

1. Verstelleinrichtung an einem Faltverdeck eines Kraftfahrzeugs, bei dem das Verdeckgestänge an beiden Dachseiten jeweils einen vorderen Dachlenker (1) und einen hinteren Dachlenker (2), die in einem Gelenk (3) um eine Querachse schwenkbar verbunden sind, und einen an einem Hebelarm des vorderen Dachlenkers (1) in einem Gelenk (5) befestigten Lenker (4) aufweist, mit einem Motorantrieb, der in einem Schwenkwinkelbereich ein Verschwenken des vorderen Dachlenkers gegenüber dem hinteren Dachlenker (2) bewirkt, dadurch gekennzeichnet, daß an einem der Dachlenker (2) oder an dem Lenker (4) ein von dem Motorantrieb (Stellzylinder 36) verstellbares Stellglied (6, 6′) angeordnet ist, das zum Verschwenken der Dachlenker (1, 2) aus der Schließstellung und/oder in die Schließstellung des Faltverdecks mit einer Stützschulter (Rand 23, 27, Zapfen 12) an dem anderen Teil, an dem Lenker oder an einem der Dachlenker, zusammenwirkt.

2. Verstelleinrichtung nach Anspruch 1, dadurch gekennzeichnet, daß zwei Stellglieder vorgesehen sind, von denen ein Stellglied ein Verschwenken der Dachlenker aus der Schließstellung und das andere Stellglied ein Verschwenken der Dachlenker in die Schließstellung des Faltverdecks ermöglicht, wenn das Faltverdeck an die Schließstellung angenähert ist.

3. Verstelleinrichtung nach Anspruch 1, dadurch gekennzeichnet, daß das Stellglied (6, 6′) zwei Wirkflächen (14 und 18, 22 und 26) aufweist, von denen eine Wirkfläche (18, 22) zum Verschwenken der Dachlenker (1, 2, 1′, 2′) aus der Schließstellung mit einer ersten Stützschulter (13, 23) und die andere Wirkfläche (14, 26′) zum Verschwenken der Dachlenker (1, 2, 1′, 2′) aus einer an die Schließstellung angenäherten Lage in die Schließstellung mit einer zweiten Stützschulter (13, 27) zusammenwirkt.

4. Verstelleinrichtung nach Anspruch 3, dadurch gekennzeichnet, daß das Stellglied (6) zwei Stützarme (7, 7′) aufweist und eine Wirkfläche (18) an einem Stützarm (7) und die andere Wirkfläche (14) an dem anderen Stützarm (7′) ausgebildet ist.

5. Verstelleinrichtung nach Anspruch 4, dadurch gekennzeichnet, daß die beiden Stützarme (7, 7′) U- oder V-förmig angeordnet sind.

6. Verstelleinrichtung nach einem der Ansprüche 1 bis 5, dadurch gekennzeichnet, daß das Stellglied (6) schwenkbar ist.

7. Verstelleinrichtung nach Anspruch 3, dadurch gekennzeichnet, daß die beiden Wirkflächen (22, 26) an einem verschiebbaren Stellglied (6′) ausgebildet sind.

8. Verstelleinrichtung nach einem der Ansprüche 1 bis 7, dadurch gekennzeichnet, daß der Motorantrieb (Stellzylinder 36) über Stangenelemente (37′, 37'', 38) und/oder Hebel (39, 40, 41) und/oder Seile mit dem Stellglied (6, 6′) verbunden ist.

9. Verstelleinrichtung nach einem der Ansprüche 1 bis 8, dadurch gekennzeichnet, daß an beiden Dachseiten je eine Verstelleinrichtung vorgesehen ist, denen ein gemeinsamer Motorantrieb (Stellzylinder 36) zugeordnet ist.

10. Verstelleinrichtung nach einem der Ansprüche 1 bis 9, dadurch gekennzeichnet, daß der Motorantrieb (Stellzylinder 36) an einem Träger (19, 19′) befestigt ist, der die seitlich gegenüberliegenden vorderen oder hinteren Dachlenker oder die Lenker (4, 4′) verbindet.

11. Verstelleinrichtung nach einem der Ansprüche 1 bis 10, dadurch gekennzeichnet, daß der Motorantrieb durch einen Elektromotor oder durch einen hydraulisch oder pneumatisch einfach oder doppelwirkenden Stellzylinder (36) gebildet ist.

## Claims

1. An adjusting device on a folding hood of a motor vehicle, the adjusting linkage comprising a front roof rod (1) and a rear roof rod (2) on each side of the roof and pivotably connected around a transverse axis at a joint (3), and a connecting rod (4) secured to a lever arm of the front roof rod (1) at a joint (5), the device also comprising a motor drive for pivoting the front roof rod through an angle relatively to the rear roof rod (2), characterised in that an actuator (6, 6') adjustable by the motor drive (an operating cylinder 36) is disposed on one of the roof rods (2) or on the connecting rod (4) and co-operates with an abutting shoulder (edge 23, 27, pin 12) on the other part, on the connecting rod or on one of the roof rods in order to pivot the roof rods (1, 2) out of the closed position and/or into the closed position of the folding hood.

2. An adjusting device according to claim 1, characterised in that two actuators are provided, one actuator for pivoting the roof rods from the closed position and the other actuator for pivoting the roof rods into the closed position of the folding hood when the folding hood has approached the closed position.

3. An adjusting device according to claim 1, characterised in that the actuator (6, 6') has two operative surfaces (14 and 18, 22 and 26), one operative surface (18, 22) co-operating with a first abutting shoulder (13, 23) for pivoting the roof rods (1, 2, 1', 2') out of the closed position and the other operative surface (14, 26') co-operating with a second abutting shoulder (13, 27) for pivoting the roof rods (1, 2, 1', 2') from a near-closed position into the closed position.

4. An adjusting device according to claim 3, characterised in that the actuator (6) has two supporting arms (7, 7'), one operative surface (18) being formed on one arm (7) and the other operative surface (14) being formed on the other arm (7').

5. An adjusting device according to claim 4, characterised in that the two arms (7, 7') are U-shaped or V-shaped.

6. An adjusting device according to any one of claims 1 to 5, characterised in that the actuator (6) is pivotable.

7. An adjusting device according to claim 3, characterised in that the two operative surfaces (22, 26) are formed on a movable actuator (6').

8. An adjusting device according to any one of claims 1 to 7, characterised in that the motor drive (operating cylinder 26) is connected to the actuator (6, 6') via rod elements (37', 37'', 38) and/or levers (39, 40, 41) and/or cables.

9. An adjusting device according to any one of claims 1 to 8, characterised in that an adjusting device is provided on each side of the roof and is associated with a common motor drive (operating cylinder 36).

10. An adjusting device according to any one of claims 1 to 9, characterised in that the motor drive (operating cylinder 36) is secured to a truss (19, 19') which connects the laterally-opposite front or rear roof rods or the connecting rods (4, 4').

11. An adjusting device according to any one of claims 1 to 10, characterised in that the motor drive is an electric motor or an hydraulic or pneumatic single-acting or double-acting operating cylinder (36).

## Revendications

1. Dispositif de réglage à un toit pliant pour un véhicule automobile, dans lequel la tringlerie du toit sur les deux côtés du toit comporte respectivement un bras de toit avant (1) et un bras de toit arrière (2) qui sont réunis en une articulation (3) en pouvant pivoter autour d'un axe transversal et un bras (4) fixé dans une articulation (5) à un bras de levier du bras de toit avant (1), avec un entraînement par moteur, qui occasionne dans une zone de rotation angulaire possible un pivotement du bras de toit avant (1) par rapport au bras de toit arrière (2), caractérisé en ce que sur un des bras de toit (2) ou sur le bras (4) est disposé un organe de réglage (6, 6') pouvant être déplacé par l'entraînement par moteur (vérin de réglage 36), organe de réglage qui agit conjointement pour le pivotement du bras de toit (1, 2) de la position de fermeture et/ou dans la position de fermeture du toit pliant, avec un épaulement d'appui (bord 23, 27, pivot 12), sur l'autre pièce, sur le bras ou sur un des bras du toit.

2. Dispositif de réglage selon la revendication 1, caractérisé en ce que sont prévus deux organes de réglage, parmi lesquels un organe de réglage permet un pivotement des bras de toit hors de la position de fermeture et l'autre organe de réglage un pivotement des bras de toit dans la position de fermeture du toit pliant, lorsque le toit pliant est approché de la position de fermeture.

3. Dispositif de réglage selon la revendication 1, caractérisé en ce que l'organe de réglage (6, 6') comporte deux faces actives (14 et 18, 22 et 26), parmi lesquelles une face active (18, 22) agit conjointement avec un premier épaulement d'appui (13, 23) pour le pivotement du bras de toit (1, 2, 1', 2') à partir de la position de fermeture et l'autre face active (14, 26') agit conjointement avec un deuxième épaulement d'appui (13, 27) pour le pivotement du bras de toit (1, 2, 1', 2') d'une position rapprochée de la position de fermeture dans la position de fermeture.

4. Dispositif de réglage selon la revendication 3, caractérisé en ce que l'organe de réglage (6) comprend deux bras d'appui (7, 7') et une surface active (18) sur un bras d'appui (7) et l'autre surface active (14) sur l'autre bras d'appui (7').

5. Dispositif de réglage selon la revendication 4, caractérisé en ce que les deux bras d'appui sont disposés en formant un U ou un V.

6. Dispositif de réglage selon l'une des revendications 1 à 5, caractérisé en ce que l'organe de réglage (6) peut pivoter.

7. Dispositif de réglage selon la revendication 3, caractérisé en ce que les deux surfaces actives (22, 26) sont réalisées sur un organe de réglage (6) pouvant coulisser.

8. Dispositif de réglage selon l'une des revendications 1 à 7, caractérisé en ce que l'entraînement par moteur (vérin de réglage 36) est relié par des barres (37', 37'', 38) et/ou un levier (39, 40, 41) et/ou par câble à l'organe de réglage (6, 6').

9. Dispositif de réglage selon l'une des revendications 1 à 8, caractérisé en ce que sur chacun des deux côtés du toit est prévu un dispositif de réglage, auquel est associé un entraînement par moteur commun (vérin de réglage 36).

10. Dispositif de réglage selon l'une des revendications 1 à 9, caractérisé en ce que l'entraînement par moteur (vérin de réglage 36) est fixé sur un support (19, 19'), qui relie les bras du toit avant ou arrière placés latéralement en vis-à-vis ou bien les bras (4, 4').

11. Dispositif de réglage selon l'une des revendications 1 à 10, caractérisé en ce que l'entraînement par moteur est constitué par un moteur électrique ou par un vérin de réglage (36) hydraulique ou pneumatique à simple ou double effet.
